# EUROPÄISCHE PATENTSCHRIFT

(11) **EP 2 165 096 B1**
(45) Veröffentlichungstag und Bekanntmachung des Hinweises auf die Patenterteilung: **25.05.2011**
(21) Anmeldenummer: 09776684.4
(22) Anmeldetag: 05.06.2009
(51) Int. Cl.: F16H 61/36

(54) **SCHALTVORRICHTUNGSGEHÄUSE FÜR KRAFTFAHRZEUGE**
SWITCHGEAR HOUSING FOR MOTOR VEHICLES
CARTER DE DISPOSITIF DE CHANGEMENT DE VITESSE POUR VÉHICULE AUTOMOBILE

(30) Priorität: 09.07.2008 DE 102008032202
(43) Veröffentlichungstag der Anmeldung: 24.03.2010
(73) Patentinhaber: ECS Engineered Control Systems AG, 9015 St. Gallen (CH)
(72) Erfinder: BREUNIG, Petra, 97647 Nordheim v. d. Rhön (DE)
(74) Vertreter: Müller, Eckhard
(86) Internationale Anmeldenummer: PCT/EP2009/004031
(87) Internationale Veröffentlichungsnummer: WO 2010/003492

(56) Entgegenhaltungen:
- EP-A- 0 834 684
- DE-B3- 10 229 059
- US-A1- 2002 157 493

## Beschreibung

Die Erfindung bezieht sich auf ein Schaltvorrichtungsgehäuse für Kraftfahrzeuge zur Aufnahme eines Übertragungsgliedes, insbesondere eines mechanisch-flexiblen Betätigungszuges, wie bspw. Seilzuges, wobei das Übertragungsglied von einem Schalthebel betätigbar ist, wobei das Gehäuse im Bereich der Anlenkung des Übertragungsgliedes an den Schalthebel eine Serviceöffnung aufweist, welche von einer Abdeckung verschließbar ist und die Außenwandung des Gehäuses im Bereich der Offnungsberandung der Serviceöffnung eine Vertiefung für eine im Wesentlichen passgenaue Aufnahme des Randabschnittes der Abdeckung aufweist, und die Abdeckung die Serviceöffnung mit dem Randabschnitt überkragt.

### Stand der Technik

Ein derartiges Schaltvorrichtungsgehäuse ist bereits aus der DE 102 29 059 B3 bekannt.

Auch ist aus der EP 0 834 684 A1 ein Schaltvorrichtungsgehäuse zur Aufnahme eines Übertragungsgliedes bekannt, welches von einem Schalthebel betätigbar ist. Das Gehäuse weist im Bereich der Anlenkung des Übertragungsgliedes an den Schalthebel eine Serviceöffnung auf, welche von einer Abdeckung verschließbar ist. Die Abdeckung ist lösbar mit dem Gehäuse verbunden, wobei zur Herstellung dieser Verbindung kraft bzw. formschlüssige Verbindungsmittel vorgesehen sind. Insbesondere wird eine Mehrzahl von Schrauben zur Befestigung der Abdeckung an der Serviceöffnung eingesetzt. Die Abdeckung ist deckelförmig ausgebildet und schließt mit der Außenwandung des Gehäuses im Wesentlichen bündig ab.

Nachteilig an diesem bekannten Schaltvorrichtungsgehäuse erweist sich, dass die Montage bzw. Demontage der Abdeckung an der Serviceöffnung des Schaltvorrichtungsgehäuses aufwendig ist, da nicht nur eine Mehrzahl von Schrauben gelöst bzw. befestigt werden müssen, sondern auch die Abdeckung bei der Montage zunächst in eine passende Lage zu bringen ist, wobei dann die Mehrzahl von Schrauben in die zugehörigen Gewindebohrungen einzudrehen sind.

Weitere bekannte Schaltvorrichtungsgehäuse für Kraftfahrzeuge sind üblicherweise zweiteilig ausgebildet mit einer am Fahrzeugboden festgelegten Trägerplatte, an welcher über Gewindebolzen ein sogenannter Adapter angeschraubt ist. In den Adapter ist ein Übertragungsglied, insbesondere ein mechanisch-flexibler Fernbetätigungszug bzw. Seilzug geführt, welcher, bspw. über einen Hebelarm, an dem Schalthebel des Kraftfahrzeuggetriebes angelenkt ist.

Um einen Austausch des Übertragungsgliedes, insbesondere des Seilzuges, durchführen zu können, ist es bei den vorbekannten Lösungen erforderlich, zunächst die Schraubmuttern von den an der karosserieseitigen Trägerplatte angeordneten Gewindebolzen zu lösen, um dann den gesamten Adapter mit darin angeordneter Schalteinrichtung und Seilzug abzunehmen. Dies erweist sich als sehr zeitaufwendig uns serviceunfreundlich. Das Gleiche gilt für den Zusammenbau nach Austausch des Seilzuges.

### Aufgabe

Davon ausgehend liegt der Erfindung die Aufgabe zugrunde, ein Schaltvorrichtungsgehäuse der eingangs genannten Art dahingehend weiterzuentwickeln, dass der Austausch des Übertragungsgliedes einfach, kostengünstig und damit servicefreundlich durchgeführt werden kann, wobei die Montage der Abdeckung vereinfacht ist.

Diese Aufgabe wird gelöst durch ein Schaltvorrichtungsgehäuse mit den Merkmalen des Anspruches 1. Vorteilhafte Ausgestaltungen sind Gegenstand der Unteransprüche.

### Darstellung der Erfindung

Nach der Erfindung wird die Schalteinrichtung mit Betätigungszug und Schalthebelmechanismus in das Gehäuse integriert, welches am Bodenblech des Kraftfahrzeuges befestigt wird. Für einen Austausch des Betätigungszuges wird lediglich ein Deckel von einer Serviceöffnung des Gehäuses entfernt, wodurch die Anbindung des Betätigungszuges an den Schalthebel leicht zugänglich ist. Ein Absenken des Gehäuses mit Seilzug und dem damit in Wirkverbindung stehenden Schalthebelmechanismus ist nicht mehr erforderlich. Bei abgenommener Abdeckung läßt sich der Seilzug in einfacher Weise vom Seilzughebel abhebeln, indem zunächst das Sicherungselement zwischen Seilzug und Schalthebelmechanismus mittels eines Werkzeuges einfach und schnell entfernt werden kann. Sodann wird der Seilzug aus dem Gehäuse herausgezogen. Das Einsetzen eines neuen Seilzuges erfolgt in gleicher einfacher Weise, jedoch in umgekehrter Reihenfolge, mit Einführen des neuen Seilzuges, Aufklipsen des Sicherungselementes an die Gelenkverbindung zwischen Seilzug und Schalthebel und schließlich Verschließen der Serviceöffnung mittels der Abdeckung. Daher ist in einem Kundendienstfall lediglich die sich durch kleine Abmessungen auszeichnende Abdeckung zu entfernen, wobei das eigentliche Gehäuse, also das großvolumige und für den Monteur unhandliche Teil am Fahrzeugboden bleibt. Ersichtlich bedarf es im Kundendienstfall nur noch des Abnehmens eines kleinen Abdeckteils, ohne dass ein unhandlicher Adapter mit Seilzug durch Lösen der Schraubverbindung abgenommen werden muß. Das Dichtelement kann nach einer weiteren Ausgestaltung der Erfindung an einem die Serviceöffnung nach außen überragenden Randabschnitt der Abdeckung angebracht sein, was die Herstellung der Abdeckung mit Dichtelement, ebenso wie die Montage wesentlich vereinfacht. Dabei weist die Außenwandung des Gehäuses im Bereich der Öffnungsberandung der Serviceöffnung eine Vertiefung für eine im Wesentlichen passgenaue Aufnahme des Randabschnittes der Abdeckung auf. Hierdurch ist eine Blindmontage des Deckels ermöglicht. Sofern der Randabschnitt der Abdeckung in die Vertiefung der Außenwandung des Gehäuses eingreift, ist gewährleistet, dass die Abdeckung ihre vorgesehene Schließstellung eingenommen hat. Dies kann allein durch Abtasten des Übergangs zwischen Außenwandung des Gehäuses und Außenseite des Randabschnittes der Abdeckung überprüft werden. Durch die i. w. passgenaue Aufnahme ist im Übrigen auch eine Verschiebesicherung der Abdeckung in ihrer Schließstellung erreicht.

Dabei erweist es sich als besonders servicefreundlich, dass die Abdeckung mittels Wandungsfortsätze die Serviceöffnung hintergreift und mit im Abstand zu den Wandungsfortsätzen angeordneten Rast- bzw. Gegenrastmittel mit dem Gehäuse verbindbar ist. Hierdurch ist eine Einhandbedienung ermöglicht, indem die Abdeckung mit ihren Wandungsfortsätzen voran zunächst in die Serviceöffnung gesteckt wird, um dann durch Ausüben eines Druckes die Rast- und Gegenrastmittel in Eingriff miteinander zu bringen und die Serviceöffnung sicher zu verschließen.

Erfindungsgemäß kann die Abdeckung als bei jedem Service zu erneuerndes Reparaturteil ausgebildet sein. Denkbar ist es aber auch, dass die Abdeckung lösbar, also wiederverwendbar mit dem Gehäuse verbindbar ist.

Die lösbare Verbindung zwischen Abdeckung und Gehäuse kann erfindungsgemäß mittels kraft- und/oder formschlüssiger Verbindungsmittel erfolgen, was die Servicefreundlichkeit erhöht.

Besonders einfach läßt sich die Abdeckung dann abnehmen, wenn die Verbindungsmittel als an der Abdeckung und/oder dem Gehäuse, vorzugsweise im Bereich der Serviceöffnung, angeordnete Rast- und Gegenrastmittel ausgebildet sind. Jedenfalls zum Einsetzen der Abdeckung in die Serviceöffnung bedarf es dann keiner gesonderten Werkzeuge. Die Abdeckung wird einfach in die Serviceöffnung eingesetzt und durch Ausüben eines Druckes in ihre Montagestellung gebracht.

Bevorzugt ist die Abdeckung deckelförmig ausgebildet, was die Handhabung beim Abnehmen als auch beim Einsetzen der Abdeckung von der Serviceöffnung erleichtert.

Bevorzugt bewirkt die Abdeckung ein flüssigkeitsdichtes Verschließen der Serviceöffnung mittels des Dichtelements.

Die Überprüfung der Schließstellung des Abdeckelementes läßt sich noch dadurch vereinfachen, wenn die Außenseite der Abdeckung mit der Außenwandung des Gehäuses i. w. bündig abschließt. Gleichzeitig ist durch diese Maßnahme einer Verletzungsgefahr für den Monteur an Kanten u. dgl. vorgebeugt.

Gehäuse und/oder Abdeckung bestehen aus einem, vorzugsweise faserverstärktem, Kunststoff, bspw. einem Polyamid, insbesondere einem faserverstärktem Polyamid.

Das Dichtelement besteht bevorzugt aus EPDM.

Die Herstellung von Abdeckung mit Dichtelement läßt sich besonders günstig in einem sogenannten Zweikomponenten-Verfahren herstellen.

### Ausführungsbeispiel

Weitere Ziele, Vorteile, Merkmale und Anwendungsmöglichkeiten der vorliegende Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine mögliche Ausführungsform eines erfindungsgemäßen Schaltvorrichtungsgehäuses für eine Schaltvorrichtung eines Kraftfahrzeuges zur Anbringung an seinem Bodenblech mit einer Abdeckung zum Verschließen einer Serviceöffnung,
- Fig. 2: das Gehäuse mit Abdeckung gemäß Figur 1 aus einer anderen Perspektive,
- Fig. 3: das Gehäuse mit in Schließstellung befindlicher Abdeckung und
- Fig. 4: eine Draufsicht auf das Gehäuse gemäß Figuren 1 bis 3 mit darin angeordnetem Seilzug und Hebelarm des Schalthebels.

Das Schaltvorrichtungsgehäuse 1 für Kraftfahrzeuge dient zur Aufnahme eines Betätigungszuges, insbesondere eines Seilzugs 2, welcher über Hebelarme von einem nicht näher dargestellten Schalthebel betätigbar ist. Die Schaltbewegungen des Seilzuges 2 werden auf das Getriebe des Kraftfahrzeuges übertragen.

Das aus glasfaserverstärktem Polyamid, insbesondere PA66-GF30 bestehende Gehäuse 1 besitzt einen Anlageflansch 10, welcher im Montagefall unter Zwischenlage einer Dichtung 11 an dem nicht dargestellten Bodenblech des Fahrzeuges fixiert wird.

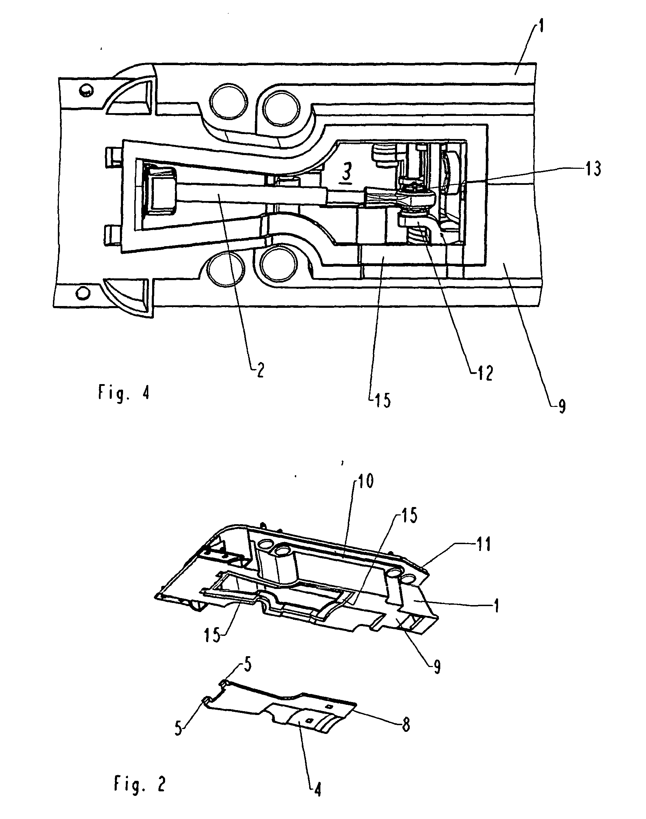

Das Gehäuse 1 dient, wie insbesondere aus Figur 4 ersichtlich, zur Aufnahme des Betätigungszuges 2, welcher über eine Gelenkverbindung 12 an dem Hebelarm 9 des Schalthebels angebunden und mittels einer Sicherung 13 auf einem Zapfen der Gelenkverbindung 12 gesichert ist. Der Seilzug 2 ist durch das Gehäuse 1 an einer Stirnseite hindurchgeführt.

In Montagestellung an dem Bodenblech des Fahrzeuges weist das Gehäuse 1 eine von unten her zugängliche Serviceöffnung 3 auf. Die Serviceöffnung 3 ist durch eine Abdeckung 4 verschließbar. Dabei ist die Serviceöffnung 3 so gewählt, dass bei abgenommener Abdeckung 4 ein Austausch des Seilzuges 2 durch Abnehmen des Sicherungselementes 13 von der Gelenkverbindung 12 und Herausziehen des zu erneuenden Betätigungszuges 2 aus dem Gehäuse 1 ermöglicht ist, ohne dass das gesamte Gehäuse 1 mit Seilzug 2 und Hebelmechanik des Schalthebels vom Fahrzeugboden abgenommen werden müßte.

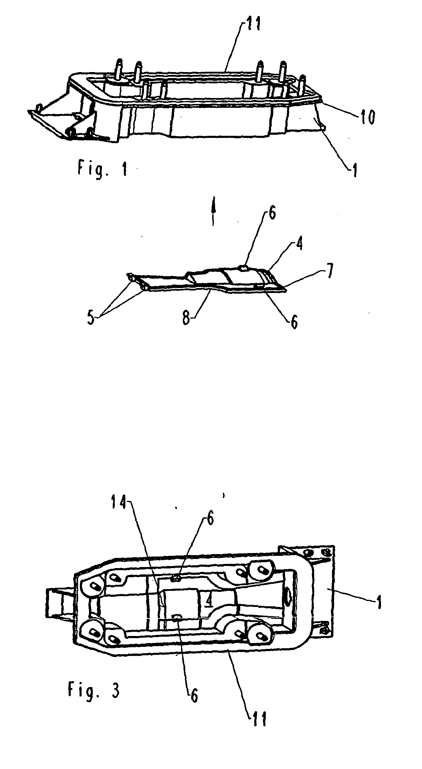

Die lösbare Verbindung der Abdeckung 4 an der Serviceöffnung 3 des Gehäuses erfolgt mittels an der Abdeckung 4 vorgesehenen Wandungsfortsätzen 5 sowie Rastelementen 6, wobei die hakenförmigen Rastmittel 6 in Schließstellung die Öffnungsberandung 14 der Serviceöffnung 3 hintergreifen, wie dies insbesondere aus Figur 3 ersichtlich ist.

Zum Einsetzen der Abdeckung 4 wird diese mit ihren Wandungsfortsätzen 5 voran in die Serviceöffnung 3 eingesteckt, wobei die Wandungsfortsätze 5 die Öffnungsberandung 14 der Serviceöffnung 3 hintergreifen. Sodann wird die Abdeckung 4 gegen die Serviceöffnung 3 gedrückt, wodurch die Rastmittel 6 in Wirkstellung mit der Öffnungsberandung 14 gelangen. Ersichtlich ist hierdurch eine Einhandbedienung beim Verschließen der Serviceöffnung 3 durch die Abdeckung 4 ermöglicht.

Um eine Abdichtung der Serviceöffnung 3 zu erreichen, weist die Abdeckung 4 bei dem hier gewählten Ausführungsbeispiel eine die Serviceöffnung 3 umlaufend überkragenden Randabschnitt 8 auf, aus welchem ein Dichtelement 7 angeordnet ist.

Wie aus Figuren 2 bis 4 ersichtlich, weist die Außenwandung 9 des Gehäuses 1 im Bereich der Öffnungsberandung 14 der Serviceöffnung 3 eine Vertiefung 15 für eine passgenaue Aufnahme des Randabschnittes 8 der Abdeckung 4 auf. Hierdurch ist eine Blindmontage des Deckels 4 und eine Verschiebesicherung in seiner Schließstellung erreicht. Dabei ist das Maß der Vertiefung 15 so gewählt, dass die Außenseite der Abdeckung 4 mit der Außenwandung 9 des Gehäuses 1 i. w. bündig abschließt.

Bevorzugt besteht das Gehäuse 1 und die Abdeckung 4 aus glasfaserverstärktem Polyamid, wobei das Dichtelement aus Ethylen-Propylen-Dien-Kautschuk besteht.

Die aus Kunststoff, insbesondere Polyamid bestehende Abdeckung 4 und das an der Überdeckung 8 angeordnete Dichtelement 7 können im Zweikomponeten-Verfahren hergestellt sein.

### Bezugszeichenliste

- 1 -: Schaltungsvorrichtungsgehäuse
- 2 -: Betätigungszug, Seilzug
- 3 -: Serviceöffnung
- 4 -: Abdeckung
- 5 -: Wandungsfortsatz
- 6 -: Rast- und Gegenrastmittel
- 7 -: Dichtelement
- 8 -: Randabschnitt
- 9 -: Außenwandung
- 10 -: Anlageflansch
- 11 -: Dichtung
- 12 -: Gelenkverbindung
- 13 -: Sicherung
- 14 -: Offnungsberandung
- 15 -: Vertiefung

## Patentansprüche

1. Schaltvorrichtungsgehäuse (1) für Kraftfahrzeuge zur Aufnahme eines Übertragungsgliedes, insbesondere eines mechanisch-flexiblen Betätigungszuges (2) oder eines Seilzuges, welches von einem Schalthebel betätigbar ist, wobei das Gehäuse (1) im Bereich der Anlenkung des Übertragungsgliedes (2) an den Schalthebel eine Serviceöffnung (3) aufweist, welche von einer Abdeckung (4) verschließbar ist und die Außenwandung (9) des Gehäuses (1) im Bereich der Öffnungsberandung (14) der Serviceöffnung (3) eine Vertiefung (15) für eine im Wesentlichen passgenaue Aufnahme des Randabschnittes (8) der Abdeckung (4) aufweist, und die Abdeckung (4) die Serviceöffnung (3) mit dem Randabschnitt (8) überkragt, **dadurch gekennzeichnet, dass** an dem Randabschnitt (8) ein umlaufendes Dichtelement (7) vorgesehen ist und Wandungsfortsätze (5) der Abdeckung (4) in die Serviceöffnung (3) eingesteckt sind und eine Öffnungsberandung (14) der Serviceöffnung (3) hintergreifen, wobei mit im Abstand zu den Wandungsfortsätzen (5) angeordneten Rast- bzw. Gegenrastmittel (6), die in Wirkstellung mit der Öffnungsberandung (14) gelangen, die Abdeckung (4) mit dem Gehäuse (1) lösbar verbunden ist.

2. Schaltvorrichtungsgehäuse nach Anspruch 1, **dadurch gekennzeichnet, dass** die Abdeckung (4) deckelförmig ausgebildet ist.

3. Schaltvorrichtungsgehäuse nach einem der vorhergehenden Ansprüche, **dadurch gekennzeichnet, dass** das Dichtelement (7) für ein flüssigkeitsdichtes Verschließen der Serviceöffnung (3) durch die Abdeckung (4) vorgesehen ist.

4. Schaltvorrichtungsgehäuse nach einem der vorhergehenden Ansprüche, **dadurch gekennzeichnet**, die Außenseite der Abdeckung (4) mit der Außenwandung (9) des Gehäuses (1) im Wesentlichen bündig abschließt.

5. Schaltvorrichtungsgehäuse nach einem der vorhergehenden Ansprüche, **dadurch gekennzeichnet, dass** das Gehäuse (1) und/oder Abdeckung (4) aus einem, vorzugsweise faserverstärkten, Kunststoff, bspw. einem Polyamid, insbesondere einem glasfaserverstärktem Polyamid, besteht.

6. Schaltvorrichtungsgehäuse nach einem der vorhergehenden Ansprüche, **dadurch gekennzeichnet, dass** das Dichtelement (7) aus einem gummielastischem Werkstoff, insbesondere Ethylen-Propylen-DienKautschuk(EPD) besteht.

7. Schaltvorrichtungsgehäuse nach einem der vorhergehenden Ansprüche, **dadurch gekennzeichnet, dass** die Abdeckung (4) mit Dichtelement (7) im Zweikomponenten(2-K)-Verfahren hergestellt sind.

## Claims

1. Switching device housing (1) for motor vehicles for mounting a transmission element, particularly a mechanical-flexible actuating pull (2) or a cable pull, which is actuable by a switch lever, wherein the housing (1) has in the region of the articulation of the transmission element (2) to the switch lever a service opening (3) closable by a cover (4) and the outer wall (9) of the housing (1) has in the region of the opening edge (14) of the service opening (3) a recess (15) for reception with substantially precise fit of the edge section (8) of the cover (4), and the cover (4) projects beyond the service opening (3) by the edge section (8), **characterised in that** an encircling sealing element (7) is provided at the edge section (8) and wall projections (5) of the cover (4) are inserted into the service opening (3) and engage behind an opening edge (14) of the service opening (3), wherein the cover (4) is detachably connected with the housing (1) by detent and counter-detent means (6) which are arranged at a spacing from the wall projections (5) and which enter into operative setting with the opening edge (14).

2. Switching device housing according to claim1, **characterised in that** the cover (4) is of lid-shaped construction.

3. Switch device housing according to one of the preceding claims, **characterised in that** the sealing element (7) is provided for liquid-tight closure of the service openings (5) by the cover (4).

4. Switching device housing according to any one of the preceding claims, **characterised in that** the outer side of the cover (4) is substantially flush with the outer wall (9) of the housing (1).

5. Switching device housing according to any one of the preceding claims, **characterised in that** the housing (1) and/or cover (4) consist of a, preferably fibre-reinforced, synthetic material, for example a polyamide, particularly a glassfibre-reinforced polyamide.

6. Switching device housing according to any one of the preceding claims, **characterised in that** the sealing element (7) consists of a rubber-elastic material, particularly ethylene-propylene-diene rubber (EPD).

7. Switching device housing according to any one of the preceding claims, **characterised in that** the cover (4) is produced together with the sealing element (7) in a two-component method.

## Revendications

1. Carter de dispositif de changement de vitesse (1) pour véhicules automobiles destiné à loger un élément de transmission, notamment un câble d'actionnement (2) flexo-mécanique ou un câble de transmission pouvant être actionné par un levier de changement de vitesse, le carter (1) comportant, dans la zone de l'articulation de l'élément de transmission (2) au niveau du levier de changement de vitesse, une ouverture d'entretien (3) pouvant être fermée par un cache (4) et la paroi extérieure (9) du carter (1) comportant, dans la zone du bord d'ouverture (14) de l'ouverture d'entretien (3), un renfoncement (15) prévu pour un logement pour l'essentiel ajusté du segment de bord (8) du cache (4) et le cache (4) recouvrant l'ouverture d'entretien (3) avec le segment de bord (8), **caractérisé en ce qu'**un élément d'étanchéité (7) périphérique est prévu au niveau du segment de bord (8) et des prolongements de paroi (5) du cache (4) sont insérés dans l'ouverture d'entretien (3) et agrippent par l'arrière un bord d'ouverture (14) de l'ouverture d'entretien (3), le cache (4) étant relié de façon amovible au carter (1) grâce à des moyens d'encliquetage ou de contre-encliquetage (6) disposés à une certaine distance des prolongements de paroi (5) et agissant avec le bord d'ouverture (14).

2. Carter de dispositif de changement de vitesse selon la revendication 1, **caractérisé en ce que** le cache (4) prend une forme de couvercle.

3. Carter de dispositif de changement de vitesse selon l'une quelconque des revendications précédentes, **caractérisé en ce que** l'élément d'étanchéité (7) est prévu pour assurer une fermeture étanche aux liquides de l'ouverture d'entretien (3) à travers le cache (4).

4. Carter de dispositif de changement de vitesse selon l'une quelconque des revendications précédentes, **caractérisé en ce que** le côté extérieur du cache (4) se finit pour l'essentiel en affleurement avec la paroi extérieure (9) du carter (1).

5. Carter de dispositif de changement de vitesse selon l'une quelconque des revendications précédentes, **caractérisé en ce que** le carter (1) et/ou le cache (4) sont réalisés à partir d'un plastique de préférence renforcé en fibres, par exemple un polyamide, notamment un polyamide renforcé en fibres de verre.

6. Carter de dispositif de changement de vitesse selon l'une quelconque des revendications précédentes, **caractérisé en ce que** l'élément d'étanchéité (7) est fabriqué à partir d'une matière élastique en caoutchouc, notamment du caoutchouc éthylène-propylène-diène (EPD).

7. Carter de dispositif de changement de vitesse selon l'une quelconque des revendications précédentes, **caractérisé en ce que** le cache (4) est fabriqué avec un élément d'étanchéité (7) selon un procédé bi-composants (2-K).
